# EUROPÄISCHE PATENTANMELDUNG

(11) **EP 0 535 476 A2**
(43) Veröffentlichungstag der Anmeldung: **07.04.1993**
(21) Anmeldenummer: 92116058.6
(22) Anmeldetag: 19.09.1992
(51) Int. Cl.: B30B 1/26

(54) **Vorrichtung an einer Presse zum Verstellen der Hübe eines Arbeitsstössels und einer Gegenschwingmasse**

(30) Priorität: 04.10.1991 DE 4132976
(71) Anmelder: SCHULER PRESSEN GmbH & Co., D-73033 Göppingen (DE)
(72) Erfinder: Bareis, Alfred, W-7336 Uhingen (DE); Braun, Reinhard, W-7332 Eislingen (DE)

(57) **Zusammenfassung**

Die Erfindung betrifft eine Vorrichtung an einer Presse mit Exzenterwelle zum Verstellen der Hübe eines Arbeitsstößels und einer Gegenschwingmasse mittels verstellbarer Exzenter-/Exzenterbüchsenpaarungen, wobei die Exzenterbüchsen auf den Exzentern dadurch im Drehsinne lösbar und festlegbar sind, daß die Verbindung jeweils ein Preßverband mit zylindrischen Paßflächen ist, der durch Zuführen von Drucköl lösbar ist.

Eine solche Vorrichtung soll so ausgestaltet werden, daß sie eine schmale Bauweise der Presse mit verhältnismäßig kurzer Exzenterwelle ermöglicht.

Dies wird dadurch erreicht, daß die Exzenter (8, 9) unmittelbar nebeneinander auf der Exzenterwelle (4) angeordnet und die Exzenterbüchsen (10, 14) über radiale Scheiben (12) mit radialen Schlitzen (13) und darin eingreifendem Bolzen (15) untereinander drehverbunden sind. Das Verstellen der Hübe erfolgt durch Drehen der Exzenterwelle (4) bei gelösten Preßverbänden und arretierten Exzenterbüchsen 10, 14).

## Beschreibung

Die Erfindung bezieht sich auf eine Vorrichtung an einer Presse mit Exzenterwelle zum Verstellen des Hubes eines Arbeitsstößels und des Hubes einer dem Massenausgleich dienenden Gegenschwingmasse durch Verstellen der resultierenden Exzentrizitäten zweier unter gleichem Zentriwinkel angeordneter Exzenter-/Exzenterbüchsenpaarungen gleicher Exzentrizitäten, auf denen den Arbeitsstößel tragende Arbeitspleuel gelagert sind, und einer zwischen diesen beiden Exzenter-/Exzenterbüchsenpaarungen angeordneten, weiteren Exzenter-/Exzenterbüchsenpaarung, deren Exzenter zu den Exzentern der beiden anderen Exzenter-/Exzenterbüchsenpaarungen um 180° Zentriwinkel versetzt ist, und auf der ein die Gegenschwingmasse tragender Massenausgleichspleuel gelagert ist, wobei die Exzenterbüchsen auf den Exzentern dadurch wahlweise im Drehsinne lösbar und festlegbar sind, daß die Lagerung der Exzenterbüchsen auf den ein Übermaß aufweisenden Exzentern ein jeweils zwischen diesen beiden Teilen hergestellter Preßverband mit zylinderischen Paßflächen ist, der durch Zuführen von Drucköl über mindestens eine Nut in mindestens einer Paßfläche lösbar ist, und wobei die Exzenterbüchsen an einem nicht mit der Exzenterwelle drehenden Teil festlegbar sind und in diesem festgelegten Zustand bei von den Exzentern gelösten Exzenterbüchsen die Exzenterwelle zwecks Verstellens der Hübe verdrehbar ist.

Bei einer bekannten Vorrichtung dieser Art (EP 0 248 917 A1) ist unmittelbar neben jeder Exzenter-/Exzenterbüchsenpaarung auf einem zentrischen Abschnitt der Exzenterwelle eine Winkelgeberscheibe drehbar gelagert, die eine zur Exzenterbüchse hin offene, radiale Nut aufweist, in die ein zur Exzenterwelle paralleler Bolzen ständig eingreift, der in der benachbarten Exzenterbüchse befestigt ist. Jede dieser Winkelgeberscheiben weist an ihrem Außenumfang eine Ausnehmung auf, in die ein radial zur Exzenterwelle verschiebbarer, im übrigen gestellfest angeordneter Arretierbolzen einsteuerbar ist. Außerdem ist am Außenumfang jeder Winkelgeberscheibe ein Initiator vorgesehen, der einen zugeordneten, gestellfest angebrachten Sensor beaufschlagen kann. Dadurch kann die Winkellage jeder Winkelgeberscheibe überwacht und fixiert werden. Bei arretierten Winkelgeberscheiben können bei gelösten Preßverbänden in den Exzenter-/Exzenterbüchsenpaarungen deren resultierende Exzentrizitäten verstellt werden, und zwar in entsprechender Weise sowohl für den Arbeitspleuel als auch für den Massenausgleichspleuel. Vorteilhaft an dieser Anordnung ist, daß zwischen den Exzenter-/Exzenterbüchsenpaarungen samt Winkelgeberscheiben zusätzliche Lager für die Exzenterwelle angeordnet werden können, und daß die resultirenden Exzentrizitäten für die Arbeitspleuel einerseits und den Massenausgleichspleuel andererseits um genau 180° Zentriwinkel versetzt zueinander eingestellt werden können. Nachteilig an dieser bekannten Anordnung ist jedoch die große Anzahl nebeneinander auf die Exzenterwelle angeordneter Bauteile, die unter Einbeziehung zusätzlicher Lager für die Exzenterwelle zu einer unerwünscht großen Baubreite der Presse führt.

Aufgabe der Erfindung ist es daher, eine Ausgestaltung der Vorrichtung der eingangs genannten Art anzugeben, die für eine schmale Bauweise der Presse mit verhältnismäßig kurzer Exzenterwelle geeignet ist, wobei auch auf die zusätzlichen Lager für die Exzenterwelle verzichtet werden kann.

Diese Aufgabe ist bei einer Vorrichtung der eingangs genannten Art dadurch gelöst, daß die drei Exzenter unmittelbar nebeneinander auf der Exzenterwelle angeordnet sind, daß die beiden Arbeitspleuel tragenden Exzenterbüchsen mit sich radial erstreckenden, der Quermittelebene zugewandten Scheiben versehen sind, die je eine zur Quermittelebene hin offene radiale Nut oder einen radialen Schlitz aufweisen, daß die den Massenausgleichspleuel tragende Exzenterbüchse einen beidseitig vorragenden, zur Exzenterwelle parallelen Bolzen trägt, dessen vorragende Enden in die Nuten oder Schlitze in den Scheiben der beiden anderen Exzenterbüchsen über Kulissensteine ständig eingreifen, und daß wenigstens eine der beiden radialen Scheiben eine außenumfangsnahe Bohrung aufweist, in die ein am Arbeitspleuel angeordneter, zur Exzenterwelle parallel verschiebbarer Arretierbolzen einsteuerbar ist.

Damit entfallen die separaten Winkelgeberscheiben sowie die Arretierbolzen und Sensoren für diese. Allerdings ist auch die Anordnung zusätzlicher Lager für die Exzenterwelle zwischen den Exzenter-/Exzenterbüchsenpaarungen samt Winkelgeberscheiben nicht mehr möglich. Die Kupplung der zentralen, den Massenausgleichspleuel tragenden Exzenterbüchse mit den beiden außen liegenden, die Arbeitspleuel tragenden Exzenterbüchsen über die an letzteren vorgesehenen Scheiben mittels des Bolzens, der Nuten oder Schlitze und der Kulissensteine hat außerdem die Folge, daß - aus geometrischen Gründen - die resultierenden Exzentrizitäten der zentralen Exzenter-/Exzenterbüchsenpaarung und der außen liegenden Exzenter-/Exzenterbüchsenpaarungen nur in den beiden Endstellungen - maximale und minimale, resultierende Exzentrizitäten - genau um 180° Zentriwinkel zueinander versetzt liegen, während sich in den Zwischenstellungen geringfügige Abweichungen hiervon ergeben. Damit ergibt sich aber immer noch ein sehr guter, wenn auch nicht ganz vollständiger, dynamischer Massenausgleich.

Vorteilhafte Ausgestaltungen der Erfindung sind Gegenstand der ab_ hängigen Ansprüche 2 bis 6, wobei es im Rahmen der Lehre des Anspruchs 5 vorteilhaft ist, die Exzentrizitäten der zentralen, Exzenter-/Exzenterbüchsenpaarung wesentlich größer als, z.B. doppelt so groß wie die Exzentrizitäten der außen liegenden Exzenter-/Exzenterbüchsenpaarungen zu wählen, wodurch die Gegenschwingmasse kleiner gehalten werden kann.

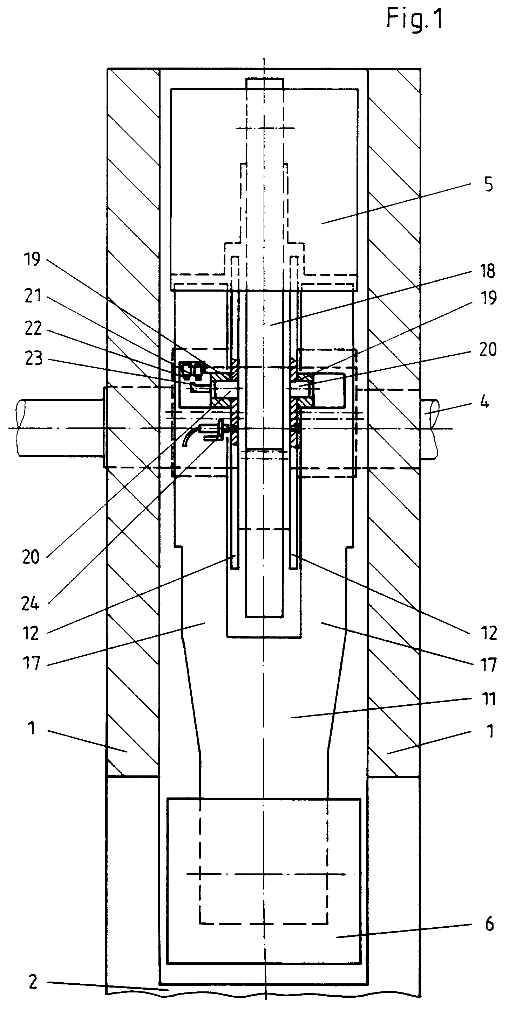

In der Zeichnung ist als Ausführungsbeispiel für die Erfindung eine Presse mit einer Vorrichtung zum Verstellen der Hübe eines Arbeitsstößels und einer Gegenschwingmasse dargestellt, und zwar zeigen
- Fig. 1: eine Vorderansicht, wobei der vorne liegende Teil des Gestells teilweise weggeschnitten ist,

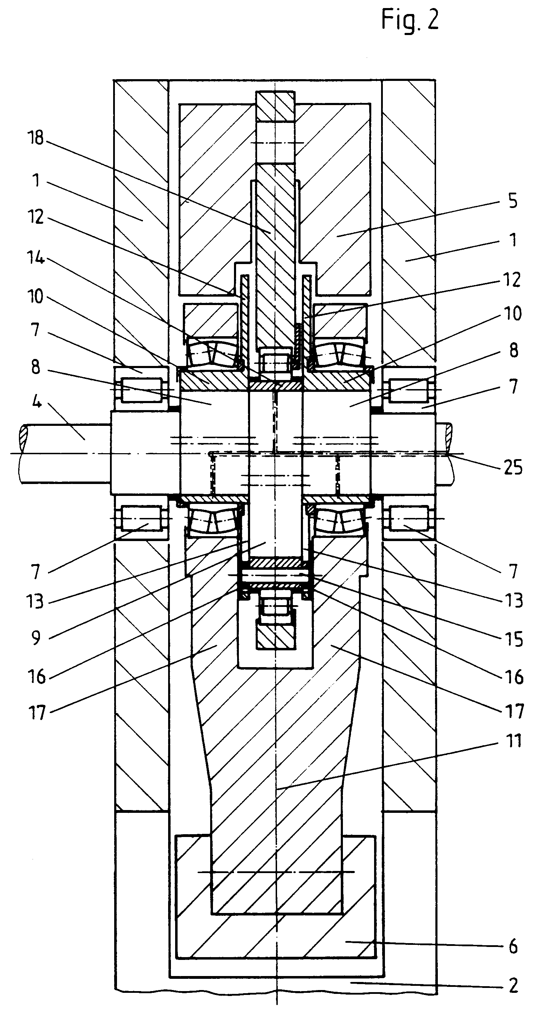

- Fig. 2: einen lotrechten Schnitt in der die Achse der Exzenterwelle enthaltenden Ebene,

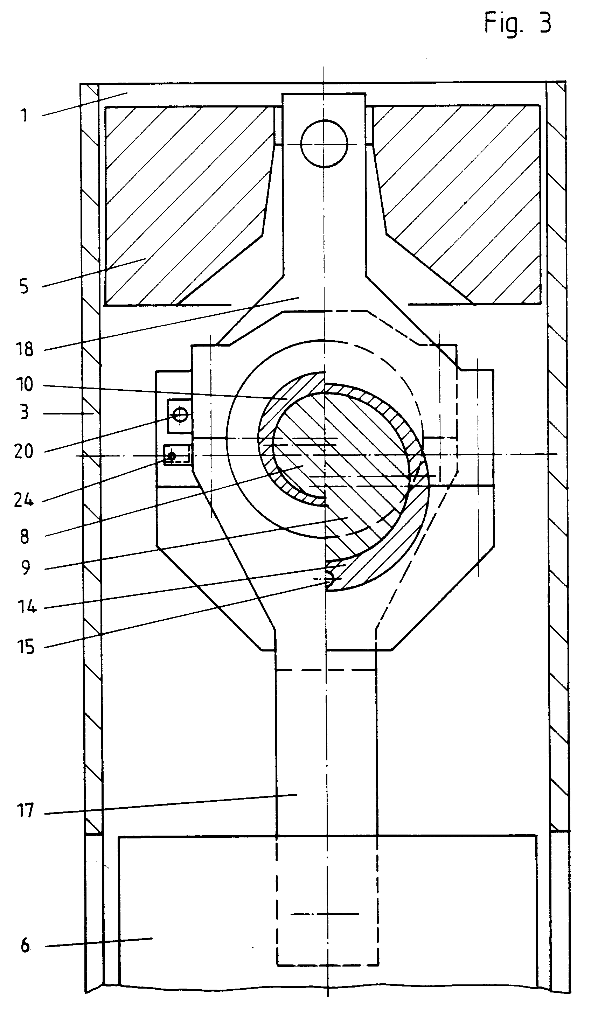

- Fig. 3: einen lotrechten Teilschnitt in der Quermittelebene.

Das Gestell der Presse besteht aus zwei Seitenständern 1, einem Pressentisch 2 und vorder- und rückseitig angeordneten Verbindungsplatten 3. In den Seitenständern 1 ist in Lagern 7 eine Exzenterwelle 4 gelagert, deren Antrieb nicht dargestellt ist. In dem Gestell ist im oberen Teil eine Gegenschwingmasse 5 und im unteren Teil ein Arbeitsstößel 6 lotrecht beweglich geführt, wobei die üblichen Führungen hierfür nicht dargestellt sind.

Die Exzenterwelle 4 weist zwischen den Lagern 7 in den diesen benachbarten Bereichen zwei gleich gerichtete Exzenter 8 kleinerer Exzentrizität und mittig zwischen diesen unmittelbar anschließend einen Exzenter 9 größerer Exzentrizität auf, der gegenüber den Exzentern 8 um 180° Zentriwinkel versetzt ist. Auf den Exzentern 8 sitzen Exzenterbüchsen 10, die auf ihren der Quermittelebene 11 zugewandten Seiten mit sich radial erstreckenden Scheiben 12 versehen sind, die je einen radialen Schlitz 13 aufweisen, wobei die beiden Schlitze 13 in die gleiche Richtung weisen.

Auf dem Exzenter 9 sitzt eine weitere Exzenterbüchse 14, die einen zur Exzenterwelle 4 parallelen, beidseitig vorragenden Bolzen 15 trägt, dessen vorragende Enden über Kulissensteine 16 in die Schlitze 13 in den Scheiben 12 ständig eingreifen. Auf den beiden Exzenterbüchsen 10 sind zwei Arbeitspleuel 17 gelagert, die anderenends gabelförmig zusammengefaßt und in dem Arbeitsstößel 6 gelagert sind. Ferner ist auf der zentralen Exzenterbüchse 14 ein Massenausgleichspleuel 18 gelagert, der anderenends in der Gegenschwingmasse 5 gelagert ist.

Die beiden radialen Scheiben 12 weisen nahe ihrem Außenumfang Bohrungen 19 auf, in die parallel zur Exzenterwelle 4 verschiebbare, an den Arbeitspleueln 17 vorgesehene Arretierbolzen 20 einsteuerbar sind, wodurch die Exzenterbüchsen 10 unmittelbar und die Exzenterbüchse 14 mittelbar festlegbar sind. Die jeweils ein- und ausgerückte Stellung eines Arretierbolzens 20 ist durch an dem einen Arbeitspleuel 17 angebrachte Sensoren 21, 22 überwachbar, die von einer Nase 23 an einer rückwärtigen Verlängerung des Arretierbolzens 20 beaufschlagbar sind. An dem einen Arbeitspleuel 17 ist ein weiterer Sensor 24 vorgesehen, mittels dessen das Erreichen derjenigen Stellung der Scheiben 12 überwacht werden kann, in der die Arretierbolzen 20 einsteuerbar sind.

Nach Festlegung der Exzenterbüchsen 10, 14 durch die Arretierbolzen 20 und Lösen der Preßverbände in den Exzenter-/Exzenterbüchsenpaarungen 8/10, 9/14 durch Druckbeaufschlagung über eine Zentralbohrung 25 in der Exzenterwelle 4 können durch Drehen der Exzenterwelle 4 in eine entsprechende Winkellage z.B. mittels eines - nicht dargestellten - Schleichgangantriebes die resultierenden Exzentrizitäten der Exzenter-/Exzenterbüchsenpaarungen 8/10 und 9/14 gleichzeitig entsprechend verstellt werden. Die Betriebsbereitschaft der Presse mit den neu eingestellten Hüben des Arbeitsstößels 6 und der Gegenschwingmasse 5 ist dann durch Rückzug der Arretierbolzen 20 und Wiederherstellung der Preßverbände - Entlastung der Zentralbohrung 25 - wieder herstellbar.

## Patentansprüche

1. Vorrichtung an einer Presse mit Exzenterwelle zum Verstellen des Hubes eines Arbeitsstößels und des Hubes einer dem Massenausgleich dienenden Gegenschwingmasse durch Verstellen der resultierenden Exzentrizitäten zweier unter gleichem Zentriwinkel angeordneter Exzenter-/Exzenterbüchsenpaarungen gleicher Exzentrizitäten, auf denen den Arbeitsstößel tragende Arbeitspleuel gelagert sind, und einer zwischen diesen beiden Exzenter-/Exzenterbüchsenpaarungen angeordneten, weiteren Exzenter-/Exzenterbüchsenpaarung, deren Exzenter zu den Exzentern der beiden anderen Exzenter-/Exzenterbüchsenpaarungen um 180° Zentriwinkel versetzt ist, und auf der ein die Gegenschwingmasse tragender Massenausgleichspleuel gelagert ist, wobei die Exzenterbüchsen auf den Exzentern dadurch wahlweise im Drehsinne lösbar und festlegbar sind, daß die Lagerung der Exzenterbüchsen auf den ein Übermaß aufweisenden Exzentern ein jeweils zwischen diesen beiden Teilen hergestellter Preßverband mit zylinderischen Paßflächen ist, der durch Zuführen von Drucköl über mindestens eine Nut in mindestens einer Paßfläche lösbar ist, und wobei die Exzenterbüchsen an einem nicht mit der Exzenterwelle drehenden Teil festlegbar sind und in diesem festgelegten Zustand bei von den Exzentern gelösten Exzenterbüchsen die Exzenterwelle zwecks Verstellens der Hübe verdrehbar ist, **dadurch gekennzeichnet,** daß die drei Exzenter (8, 9) unmittelbar nebeneinander auf der Exzenterwelle (4) angeordnet sind, daß die beiden Arbeitspleuel (17) tragenden Exzenterbüchsen (10) mit sich radial erstreckenden, der Quermittelebene (11) zugewandten Scheiben (12) versehen sind, die je eine zur Quermittelebene (11) hin offene radiale Nut oder einen radialen Schlitz (13) aufweisen, daß die den Massenausgleichspleuel (18) tragende Exzenterbüchse (14) einen beidseitig vorragenden, zur Exzenterwelle (4) parallelen Bolzen (15) trägt, dessen vorragende Enden in die Nuten oder Schlitze (13) in den Scheiben (12) der beiden anderen Exzenterbüchsen (10) über Kulissensteine (16) ständig eingreifen, und daß wenigstens eine der beiden radialen Scheiben (12) eine außenumfangsnahe Bohrung (19) aufweist, in die ein am Arbeitspleuel (17) angeordneter, zur Exzenterwelle (4) parallel verschiebbarer Arretierbolzen (20) einsteuerbar ist.

2. Vorrichtung nach Anspruch 1, **dadurch gekennzeichnet,** daß die Preßverbände zwischen den Exzenterbüchsen (10, 14) und den Exzentern (8, 9) bei Vorhandensein einer Temperaturdifferenz zwischen diesen beiden Teilen hergestellt sind.

3. Vorrichtung nach Anspruch 1, **dadurch gekennzeichnet,** daß die Preßverbände zwischen den Exzenterbüchsen (10, 14) und den Exzentern (8, 9) mittels Druckmittelbeaufschlagung der von den zylindrischen Paßflächen in den Exzenterbüchsen (10, 14) begrenzten Hohlräume hergestellt sind.

4. Vorrichtung nach Anspruch 1, 2 oder 3, **dadurch gekennzeichnet,** daß in der Exzenterwelle (4) eine axiale Druckölleitung mit mindestens einer Verbindungsleitung zu jeder Nut vorgesehen ist.

5. Vorrichtung nach einem der Ansprüche 1 bis 4, **dadurch gekennzeichnet,** daß das Verhältnis der Exzentrizitäten der Exzenterbüchsen (10, 14) zu den Exzentrizitäten der Exzenter (8, 9) bei allen Exzenter-/Exzenterbüchsenpaarungen gleich ist.

6. Vorrichtung nach Anspruch 5, **dadurch gekennzeichnet,** daß die Exzentrizitäten der Exzenter (8, 9) und die Exzentrizitäten der Exzenterbüchsen (10, 14) bei allen Exzenter-/Exzenterbüchsenpaarungen gleich sind.
